# EUROPEAN PATENT SPECIFICATION

(11) **EP 1 738 173 B1**
(45) Date of publication and mention of the grant of the patent: **18.06.2008**
(21) Application number: 05736539.7
(22) Date of filing: 20.04.2005
(51) Int. Cl.: G01N 33/543, B01L 3/00

(54) **MASKED SOLID SUPPORTS**
MASKIERTE FESTE TRÄGER
SUPPORTS SOLIDES MASQUES

(30) Priority: 21.04.2004 EP 04447101
(43) Date of publication of application: 03.01.2007
(73) Proprietor: PamGene B.V., 5211 's Hertogenbosch (NL)
(72) Inventor: INGHAM, Colin, John, NL-6707 DW Wageningen (NL)
(74) Representative: De Clercq, Ann G. Y.
(86) International application number: PCT/EP2005/004230
(87) International publication number: WO 2005/103699

(56) References cited:
- WO-A-93/09668
- WO-A-95/11755
- WO-A-03/034026
- US-A- 6 103 479
- US-B1- 6 197 575
- VAN BEUNINGEN ET AL: "Fast and specific hybridization using low-through microarrays on porous metal oxide" CLINICAL CHEMISTRY, AMERICAN ASSOCIATION FOR CLINICAL CHEMISTRY. WINSTON, US, vol. 47, no. 10, 12 December 2001 (2001-12-12), pages 1931-1933, XP002200111 ISSN: 0009-9147

## Description

### Field of the Invention

The present invention relates to masked solid porous supports and methods of manufacturing the same. Particularly, the present invention relates to applying a polymeric mask to solid supports useful in array analysis. More specifically, the present invention provides methods for high resolution introduction of polymer masks on solid supports useful in array analysis.

### Background to the Invention

In porous solid supports for use in microarray analysis, introduction or printing of polymers on the surface of said support finds its use in forming within the inner porous structure of said support a masking grid allowing unmasked regions to be exposed to reactants and analytes. Moreover, a masking grid throughout the porous depth of a solid support allows directional transfer (e.g. by diffusion) of any compound which may have been placed within the porous structure of said support prior to analysis initiation.

Micro-jet technology has proven its effectiveness in dispensing various polymer solutions on supports; e.g. in producing and placing droplets of polymers; solders etc. for multi-chip modules and chip-scale packages. As disclosed in WO 02/49051 ink-jet printing allows a multitude of individual droplets of liquid resin material to be applied to the surface of porous metal foil elements.

For analysis or microarray purposes, printing of polymers such as latex by micro-jet or ink-jet technology allows accurate placing and lining of a matrix grid with minimal volume of polymer solution and minimal waste volumes. Although the existing mask printing techniques offer the required shielding the printer heads are known to be vulnerable to clogging and damage by the polymerisation process of polymers such as latex which is an irreversible process triggered by drying of the polymer suspension.

The commonly used polymer latex is a dispersion of tiny polymer particles in water - a milky liquid consisting of around 50 percent by weight of water. The latex particles (having a diameter of a few ten-thousandths of a millimetre) are typically surrounded by a polar shell that interacts with the water and stabilizes the dispersion. Drying of the latex suspension by water evaporation in the minimal volumes result in particle coalescence and hence clogging of the apparatuses.

Addition of co-solvent(s) to the selected polymer solution (e.g., latex) results in a reduced polymerisation rate which greatly benefits its utility in printing devices preventing the aforementioned clogging.

Once applied to a surface, curing of the masking material is generally known, at least in the field of micro-electronic chips, to be accomplished in gas-fired ovens or by means of UV curing systems.

The present invention aims at developing alternative ways of curing the masking material without the requirement of installing a curing system.

The present invention aims at solving the need in the art by providing an easy, low-cost and efficient masking process that renders a convenient and accurately applied mask for solid porous supports (microarrays) and porous surfaces that require masking protection.

The present invention aims at allowing the use of high-resolution devices for precise delivery or spotting of polymer materials on porous solid supports or other surfaces by controlling the polymerisation rate. As will be well appreciated in the art, such fine resolution printing has multiple applications in various technology fields including microarray technology.

### Summary of the Invention

The present invention provides a method for fine resolution-printing of polymeric materials on a support suitable for array analysis to form a grid mask. Such a grid mask on a solid support allows certain regions on said support to be exposed and other regions to remain covered and inaccessible to the analysis performed on the exposed regions. In the present invention, the deposition of said polymeric material onto said solid porous support is followed by a fast and efficient washing out of the used co-solvent and curing of the masking material simply by contacting said solid porous support with a wash solution and extracting the co-solvent/wash solution through the pores or channels of the porous support.

Accordingly, the present invention provides a method for the manufacture of a masked solid support suitable for array analysis comprising the steps of:
(i) providing a solid porous support suitable for array analysis having first and second surfaces, said solid porous support having channels extending from said first surface to said second surface;
(ii) depositing at a predefined area on said porous solid support a polymeric material to said first surface, said polymeric material comprising a co-solvent so as to temporarily decrease the viscosity and/or rate of polymerisation of the polymeric material during the step of depositing;
(iii) allowing said polymeric material to enter said channels of said solid porous support;
(iv) removing said co-solvent by contacting said first surface with a wash solution and extracting the co-solvent/wash solution through said channels so as to restore the polymerisation rate of the polymer material within said channels,
whereby a mask on said solid support is formed.

In addition to the efficient removal of the co-solvent from the polymeric material, the present invention offers the advantage of simultaneously removing any toxic compounds and/or unknown autofluorescent compounds which may be present together with the polymeric material. For example, polymeric materials such as paints are well known to contain toxic compounds such as e.g., ammonia which could affect the analysis on the support later on. Notwithstanding the fact that ammonia hydroxide is volatile, it is not adequately removed by simply air-drying. The removal of such toxic compound along with the co-solvent by washing out with e.g. ethanol or methanol therefore highly benefits the analysis results obtained later on.

The present invention provides a masking methodology for producing porous supports suitable for use in a large area of technology including particularly the field of microarray analysis.

### Detailed Description of the Invention

Before the methods and devices of the present invention are described, it is to be understood that this invention is not limited to particular methods and devices as such methods and devices may, of course, vary. It is also to be understood that the terminology used herein is not intended to be limiting, since the scope of the present invention will be limited only by the appended claims.

Unless defined otherwise, all technical and scientific terms used herein have the same meaning as commonly understood by one of ordinary skill in the art to which this invention belongs. Although any methods and materials similar or equivalent to those described herein may be used in the practice or testing of the present invention, the preferred methods and materials are now described.

In this specification and the appended claims, the singular forms "a", "an", and "the" include plural references unless the context clearly dictates otherwise.

The present invention is directed to the manufacture of a masked solid porous support by depositing a polymer solution onto the support top surface using printing technology such as e.g. ink-jet printing. Hydrocarbon co-solvent solutions added to the polymer solution allow smooth delivery of the polymer solution onto the support surface, whereby undesired clogging of the printing heads or ink-jet nozzles is prevented. The porous character of the support allows fast and efficient removal of said co-solvent and hence fast and efficient reinstalment of the natural polymerisation process.

### Solid support

The terms "pore" and "channel" are used interchangeably within the present specification and relate to a minute opening by which matter, particularly liquids can pass through. It is contemplated within the present invention that said pores or channels may be discrete or branched. For example, it is known in the art that anodization of inorganic membranes results in the formation of partially branched channels or pores; i.e. the anodization or manufacturing process through which for example a metal oxide membrane is obtained typically results in a so-called nucleation of smaller pores at the bottom side of the membrane. Said smaller pores which extend to the bottom surface provide a branching to each larger pore that extends from the top surface (Rigby et al; 1990; in "Transactions of the Institute of metal Finishing", vol. 68(3), p. 95-98).

It is further known in the art that by microfabrication so called nanochannel glass or NCG material having regular geometric arrays of parallel discrete channels can be obtained such as disclosed in EP 0 725 682 B1. Unlike branched and partially branched channels or pores, discrete channels or pores are individually distinct and unconnected in the latter type of NCG materials.

Generally, the support according to the present invention may be composed of any material which, in case of array analysis purposes, permits immobilization of the desired molecules and which will not melt or otherwise substantially degrade under the conditions used during functioning. In addition, where covalent immobilization of biological molecules is contemplated, the support should be activatable with reactive groups capable of forming a bond, which may be covalent, with the molecule to be immobilized.

A number of materials suitable for use in supports as used in the present invention have been described in the art. Exemplary suitable supports in the present invention comprise materials including acrylic, acrylamide, methylene-bis-acrylamide, dimethylaminopropylmethacrylamide, styrenemethyl methacrylate copolymers, ethylene/acrylic acid, acrylonitrile-butadienestyrene (ABS), ABS/polycarbonate, ABS/polysulfone, ABS/polyvinyl chloride, ethylene propylene, ethylene vinyl acetate (EVA), nitrocellulose, polycarylonitrile (PAN), polyacrylate, polycarbonate, polybutylene terephthalate (PBT), polyethylene terephthalate (PET), polyethylene (including low density, linear low density, high density, cross-linked and ultra-high molecular weight grades), polypropylene homopolymer, polypropylene copolymers, polystyrene (including general purpose and high impact grades), polytetrafluoroethylene (PTFE), fluorinated ethylene-propylene (FEP), ethylene-tetrafluoroethylene (ETFE), perfluoroalkoxyethylene (PFA), polyvinyl fluoride (PVF), polyvinylidene fluoride (PVDF), polychlorotrifluoroethylene (PCTFE), polyethylene-chlorotrifluoroethylene (ECTFE), polyvinyl alcohol (PVA), silicon styreneacrylonitrile (SAN), styrene maleic anhydride (SMA), and glass. Further exemplary suitable supports comprise mixtures of two or more of the above-mentioned materials.

Other exemplary suitable materials for the manufacture of supports to be used in the present invention include metal oxides. Metal oxides provide a support having both a high channel density and a high porosity, allowing high density arrays comprising different first binding substances per unit of the surface for sample application. In addition, metal oxides are highly transparent for visible light. Metal oxides are relatively cheap supports that do not require the use of any typical microfabrication technology and, that offer an improved control over the liquid distribution over the surface of the support, such as electrochemically manufactured metal oxide membrane. Metal oxides considered are, among others, oxides of tantalum, titanium, and aluminium, as well as alloys of two or more metal oxides and doped metal oxides and alloys containing metal oxides. The metal oxide membranes are transparent, especially if wet, which allows for assays using various optical techniques.

Particularly useful metal oxide supports or membranes to be used in the methods of the present invention may be anodic oxide films. As well known in the art, aluminium metal may be anodized in an electrolyte to produce an anodic oxide film. The anodization process results in a system of larger pores extending from one face and interconnecting with a system of smaller pores extending from the other face. Pore size is determined by the minimum diameters of the smaller pores, while flow rates are determined largely by the length of the smaller pores, which can be made very short. Accordingly, such membranes may have oriented through-going partially branched channels with well-controlled diameter and useful chemical surface properties. WO 99/02266, which describes the use of Anopore^{™}, is exemplary in this respect.

Useful thicknesses of the metal oxide supports or membranes useful in the methods of the present invention may for instance range from 50 µm to 150 µm (including thicknesses of 60, 70, 80, 90, 100, 110, 120, 130 and 140 µm). A particular suitable example of support thickness is 60 µm.

A suitable support pore diameter ranges from 150 to 250 nm including 160, 170, 180, 190, 200, 210, 220, 230 and 240 nm. A particular suitable example of pore diameter is 200 nm. These dimensions are not to be construed as limiting the present invention.

Accordingly, in one embodiment of the invention, a method is provided for the manufacture of a masked solid porous support wherein said solid porous support is a flow-through support.

In another embodiment of the present invention a method is provided for the manufacture of a masked solid porous support, wherein said solid porous support is a metal oxide support.

In another embodiment of the present invention a method is provided for the manufacture of a masked solid porous support, wherein said metal oxide is aluminium oxide.

It is an object of the present invention to provide for a masked solid support suitable for array analysis. Masked solid supports according to the present invention comprise a mask grid through the support wherein said grid is a 3-dimensional network of vertical and horizontal lines of dried or polymerised polymeric material.

The terms "grid", "mask grid" and "grid mask" are used interchangeable within the present specification and refer to a mask in the form of a grid structure. Where the support is porous and three-dimensional the grid is likely to be a three-dimensional grid through said support.

Accordingly, the present invention provides a masked solid porous support suitable for array analysis comprising first and second surfaces, said solid porous support having channels extending from said first surface to said second surface; wherein at a predefined area on said porous solid support a polymeric material is present, wherein said polymeric material is within the channels of said porous solid support and forms a mask on the solid porous support.

It is understood by the term "first and second surfaces" that a support has a top and a bottom surface being separated by an intermediate three-dimensional porous structure of channels. Said top and bottom surface are the exteriors or upper and lower boundaries of the support. Where first and second surfaces and intermediate structure are of identical material they are likely to form one whole with the intermediate porous structure. Alternatively, first and second surface may be of a material different to the intermediate material.

In one embodiment of the present invention a solid porous support is provided having at a predefined area a polymeric material deposited, wherein said solid porous support is a flow-through support.

In another embodiment of the present invention a solid porous support is provided having at a predefined area a polymeric material deposited, wherein said solid porous support is a metal oxide support.

In a further embodiment of the present invention a solid porous support is provided having at a predefined area a polymeric material deposited, wherein said metal oxide is aluminium oxide.

### Polymeric material

The term "polymeric material" within the present specification means any polymer which can be dissolved or dispersed in a liquid medium or solvent and which may be deposited on a solid support surface by way of printing, pipetting or manual handling, and which is allowed to enter the pores of a porous support and which will not melt or otherwise substantially degrade under the conditions used to perform the envisioned analysis, e.g. microarray analysis. The polymeric material useful within the present invention usually is in the form of an emulsified polymer (e.g., latex), acrylic polymer, or resin (solid or semi-solid organic compounds of natural or synthetic origin) comprising an aqueous dispersion of water-insoluble solid or semi-solid polymer particles. Where the polymer solution is printed by way of a printer head, the polymer particle size is delimited by the orifice opening of the printer head or other handling apparatus.

According to the present invention, prior to deposition on a surface, an un-polymerised organic material is mixed with a co-solvent such as e.g. ethylene glycol that slows down the rate of drying and therefore also the rate of interlocking of the string-like organic polymer molecules; i.e. the polymerisation.

The present invention contemplates the use of natural as well as synthetic polymer or latex solutions. Non-limiting examples of suitable latex polymers include polyvinyl chloride (PVC), polyurethanes, silicones, synthetic latex such as acrylics, polyvinyl acetate, polystyrene, styrene acrylics, styrene butadiene, polyvinyl acetate, vinyl acetate-ethylene, and vinyl acrylics.

Accordingly, in one embodiment of the present invention, a method is provided for the manufacture of a masked solid support, wherein the polymeric material is a latex polymer.

Other polymers that form by drying such as a number of glues are also suitable for use within the methods of the present invention.

In another embodiment of the present invention, a solid porous support is provided having at a predefined area a polymeric material deposited thereon, wherein said polymeric material is a latex polymer.

### Co-solvents

The term co-solvent as used within the present specification is to be understood as any solvent which is added to the emulsified polymer solution (in said solution typically water is the solvent) and which decreases the polymerisation rate of the polymer within the used polymer solution. Decreased polymerisation allows an overall easier handling of the polymer solution.

Addition of at least one co-solvent to the liquid polymeric material decreases its viscosity and/or rate of polymerisation by reducing the rate of drying of said polymeric material.

Suitable co-solvents for use within the methods of the present invention include without limitation glycols and glycol ethers including combinations thereof. Non-limiting examples of glycols are ethylene and propylene glycol. Non-limiting examples of glycol ethers, also known as cellosolves and known for their use in surface coatings, such as lacquers, paints, and varnishes; fingernail polishes and removers; dyes; writing inks; cleaners; and degreasers include ethylene glycol monoethyl ether, ethylene glycol monobutyl ether, propylene glycol monomethyl ether, dipropylene glycol monomethyl ether, dipropylene glycol dimethyl ether, tripropylene glycol monomethyl ether, and propylene glycol methyl ether acetate.

Accordingly, in one embodiment of the invention a method is provided for the manufacture of a masked solid support wherein a co-solvent is added to the polymer material and wherein said co-solvent is chosen from the group comprising glycols and glycol ethers.

The co-solvent content of the polymer solution/co-solvent mixture within the present invention can be from 0.01 % to 90% Vol including ranges between 1% and 85% Vol, 5% and 80% Vol, 10% and 70% Vol, 15% and 60% Vol, 20% and 50% Vol, including the outer limits and varies depending on the particular co-solvent used. When ethylene glycol is used as the co-solvent, typically 5 to 50% Vol of the ethylene glycol is present in the polymer solution/co-solvent mixture. A particular suitable amount of ethylene glycol in the polymer solution/co-solvent mixture is 10% Vol. Another particular suitable amount of ethylene glycol in the polymer solution/co-solvent mixture is 25% Vol.

### Agents

In addition to the co-solvent, optionally one or more agents may be added to the polymer solution in order to provide the mask grid with a property tuned to the specific application for which the solid support is finally used.

Accordingly, in one embodiment of the present invention a method is provided for the manufacture of a masked solid support, wherein the polymeric material comprises an agent, said agent affecting the mask properties.
A non-limiting list of agents which are useful within the present invention and the resulting mask properties obtained are provided in Table 1.

In another embodiment of the present invention, a solid porous support is provided having at a predefined area a polymeric material deposited, said polymeric material comprising an agent, said agent affecting the mask properties.

The desired mask property may be chosen according to the final purpose or use of the support. For example, the intended use of the support may be the monitoring of motile organisms which need to be confined to predefined regions on the support. The mask grid may contain an agent that allows the said motile organisms to be repelled from the mask grid so as to keep the said motile organism at a certain spot on the support surface. Another example is the addition of a magnetically charging agent for purposes of e.g. molecule adhesion and/or separation.

In a further embodiment of the present invention, a method is provided for the manufacture of a masked solid support wherein said mask properties are chosen from the group comprising electricity conduction, colour, magnetical charge, hydrophobicity, adhesion/absorption of microorganisms, adhesion/adsorption by tissue culture cells, and repellent/attracting property.

The present invention equally provides a solid porous support having at a predefined area a polymeric material in combination with an agent deposited thereon, wherein said agent affects the mask property chosen from the group comprising electricity conduction, colour, magnetical charge, hydrophobicity, adhesion/absorption of microorganisms, adhesion/adsorption by tissue culture cells, and repellent/attracting property.

### Polymer solution deposition

The present invention provides for precision-masked solid supports. Fine resolution-printing is accomplished by accurately dispensing the masking polymer material solution, i.e., polymer solution and added co-solvent, optionally mixed with an agent, with printer heads or ink-jet nozzles onto the support's surface.

Delivering of the masking polymeric material optionally mixed with an agent may be by means of contact or non-contact spotting. The term "contact spotting" or "contact force" as used in this specification means a direct surface contact between a support and a delivery mechanism/device that may contain one or a plurality or an array of tweezers, pins or capillaries that serve to transfer or deliver any content within the delivery mechanism/device to the surface by physically tapping said tweezer(s), pin(s) or capillary(ies) on the surface. Basically, contact printing generally is a printing technique suitable in the present invention, even on a fine scale. For example photolithography can be used to make a contact printing device that can deposit a polymeric material. All these methods and devices are well known in the art.

Alternatively, the polymeric material may also be delivered or spotted through ink-jet printing technology, a non-contact technology in which a solution is printed onto the surface using technology adapted from computer ink- jet printers. The ink- jet method is sometimes called indirect because the solution is dropped onto the surface rather than being directly placed. Ink- jet methods may be capable of producing smaller spots, and because they avoid physical contact with the surface may prove to be more reliable.

Useful ink-jet printing methodologies may include continuous and drop-on-demand ink-jet methods. Most suitable ink-jet printing methods are drop-on-demand ink-jet methods, examples of which include piezoelectric and electrostatic ink-jet systems. All these methods are well known and described in the art.

Further useful in the present invention are spotting robots or liquid handling devices. Most spotting robots or liquid handling devices use an X-Y-Z robot arm (one that can move in three dimensions) mounted on an anti-vibration table. Said arm may hold nozzles in case of non-contact spotting. In contact spotting, said arm may hold pins. Nozzles or pins are dipped into a first microtiter plate to pick up the solution to be delivered. The tips in case of pins are then moved to the solid support surface and allowed to touch the surface only minimally; the solution is then transferred. The pins are then washed and may be moved to a next set of wells and solutions. Solid pins, quills, and pin- and- ring configurations of pins may be useful.

Accordingly, in one embodiment of the present invention, a method for the manufacture of a masked solid support is provided wherein the depositing step of polymer material is by a means chosen from the group comprising a high precision x-y-z pipettor, inkjet printer, and manual handling.

The computer controlled dispensing mechanism allows a well-controlled placing of droplets onto the surface of the support which then form a network of horizontal and perpendicular lines which are usually uniformly spaced but depending on the application's requirements may form non-uniformly spaced lines as well. A useful line width within the present invention ranges between 10 to 10000 µm including the outer limits, including the ranges 50 to 5000 µm, 100 to 1000 µm, including the outer limits. Depending on the application, a particular useful line width may be 300 µm; another particular useful line width may be 1 mm.

In addition to its advantageous use during emerging from the printer head and deposition of polymer droplets, the inclusion of a co-solvent in the polymer liquid simplifies the impregnation of the channels within the solid porous support with the polymer material.

Mask grids applied on the surface of a solid porous support according to the present invention allow the grid to be formed through (all or part of) the depth of the porous support. As an example: through a 60 µm thick porous support, such as e.g. Anopore^{™} membrane, a 60 micron sample fills the pores throughout the thickness of the support. Given either increasing thickness or more rapid polymerisation, the pores will not fill completely. As such, depending on the specific application that is envisaged a variation in either thickness of the porous support compared to the amount of polymer solution an/or a variation in the polymerisation rate (depending on the amount of added co-solvent) may be installed in order to obtain a degree of filling of the pores with said polymer solution from 100% to e.g. 50%. Usually, pores are filled with the polymer solution throughout the thickness (100%) of the porous support.

Accordingly, in one embodiment of the present invention, a method is provided for the manufacture of a masked solid support wherein a mask on said solid support is formed and wherein said mask forms a grid of polymeric material through said solid porous support.

The line or mask depth varies according to the height or thickness of the support. The support height may range from 10 to 100 µm. A more useful support height or support thickness ranges between 20 and 90 µm. An even more useful support height or support thickness ranges between 30 and 80 µm. An even more useful support height or support thickness ranges between 40 and 70 µm. A particular suitable support thickness within the present invention is 60 µm.

In another embodiment of the present invention, a solid porous support is provided wherein a mask is formed as a grid of polymeric material through said solid porous support.

### Curing

Application onto the support's surface and penetration of the polymer material into the channels is followed by a curing step so as to reinstall the natural polymerisation rate of the polymer matrix within the porous support and to form a matrix grid throughout (or part of) the support.

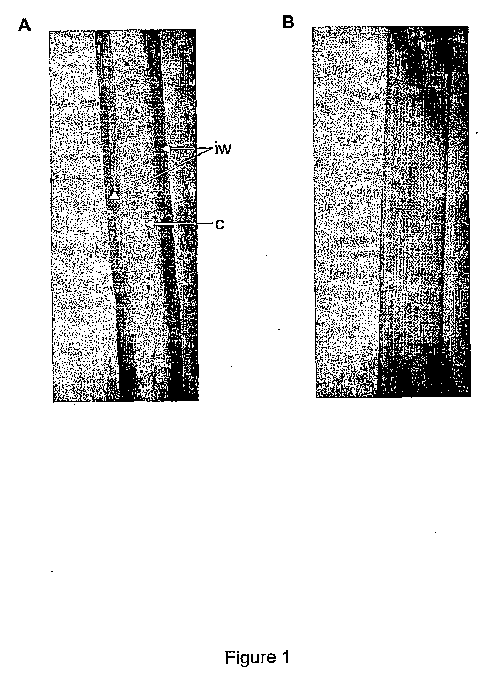

Within the present invention, the polymer material within the pores is first allowed to partially polymerise as shown in Figure 1A. Subsequently the co-solvent added to the polymer material solution prior to deposition to the support surface is removed from the partially polymerised material within the pre-selected pores by contacting the support's external surface with a wash solution allowing it to penetrate said pores whereby said wash solution is extracted or washed out together with the co-solvent at the bottom of the porous support. Alternatively, the porous structure of the support may be subjected to a back and forth or up and down flowing of a wash solution through the pores. By applying a pressure difference over the support (a positive and negative pressure may be applied to the support) the wash solution is pumped dynamically up and down through the substrate pores; for example WO 01/19517 is exemplary in this respect.

Removal of the co-solvent completes the polymerisation of the polymer material to full range as shown in Figure 1B.
Suitable wash solutions for use within the present invention include but are not limited to organic solvents such as ethanol (for example 70% or 100% Vol ethanol), DMSO, acetone, chloroform, cyclohexanone.

### Molecular analysis

With microarray analysis as the one of the preferred intended uses of the masked supports according to the present invention, the provision of biological molecules within the unmasked porous structure of the support is contemplated within the present invention. As such, the present invention also provides for masked solid porous supports comprising within the unmasked channels biomolecules. Said biomolecules may represent a library of compounds useful in e.g. drug screening practices. Said compound(s) may be present in dried or other concentrated state after applying e.g. slow evaporation, vacuum drying, freeze drying methods or by e.g. by blowing air or an inert gas such as e.g. helium above and below the porous support. Said compound(s) may be present in the form of e.g. lyophilised compounds or, alternatively, they may be present in solution - these forms of compound occurrences are well known in the art

General suitable classes of compounds for use in the masked solid supports according to the present invention are well known in the art and include, by way of example and not limitation, natural compounds derived e.g. from plants with defined therapeutic applications, chemically synthesized compounds, compounds derived from combinatorial chemistry, peptide-based compounds, peptide derivatives and the like.

Biologically active libraries may include proteolytic enzymes such as for example serine proteases like trypsin, non-proteolitic enzymes including inducer molecules, chaperone proteins, antibodies and antibody fragments, agonists, antagonists, inhibitors, G-coupled protein receptors (GPCRs), non-GPCRs, and cytotoxic and anti-infective agents. Examples of libraries without disclosed biologically activity may include scaffold derivatizations, acyclic synthesis, monocyclic synthesis, bicyclic and spirocyclic synthesis, and poly and macrocyclic synthesis, or compounds which interact with any of the above-mentioned molecules. All these libraries are well known in the art.

In particular, inducer molecules, chaperone proteins, hormones, oligopeptides, nucleic acids and synthetic variants thereof such as PNA's or LNA's, agonists, antagonists, inhibitors of cellular functions, enhancers of cellular functions, transcription factors, growth factors, differentiation-inducing agents, secondary metabolites, toxins, glycolipids, carbohydrates, antibiotics, mutagens, drugs, and any combination thereof are suitable compounds for use within the present invention.

Compounds obtained through combinatorial and so-called fast synthesis may be equally suitable.

For applications wherein a high-complexity analysis is required, the use of external devices is also contemplated within the present invention. In this context; the use of a so-called supply chamber is contemplated by the present invention. European application No. 03447276.1 related to such supply chambers.

A supply chamber allows the delivery of reactants or biomolecules or compounds to the solid support which otherwise may suffer impracticalities; e.g. which may clog the capillaries of e.g. a spotting device, or needles or tips of a liquid handling device. A supply chamber as such gives access of its content to at least one array within an array of arrays to which it is attached by either physical attachment or by mechanical attachment or merely by being in liquid contact with the array.

Said physical and/or liquid contact may be reversible and allow subsequent supply chambers with diverse contents to be combined with a same solid porous support. A removable supply chamber offers the advantage and flexibility of transferring compounds to the solid support and immediate interruption of said supply by removal of the chamber.

Compounds may be stored in the supply chamber after a drying treatment, after which they can be dissolved again, later on when an assay needs to be performed. Upon compound dissolution; e.g. when in contact with an appropriate liquid or buffer, the compounds diffuse from the supply chamber into and through the pores of the porous solid support.

### General Applications

The methods and devices according to the present invention are useful in a number of applications.

In one embodiment, the present invention provides for the use of a solid porous support as described herein for microarray analysis.

In another embodiment, the present invention provides for the use of a solid porous support as described herein for cell-based assays.

In a further embodiment, the present invention provides for the use of a solid porous support as described herein for drug screening assays.

It is a further object of the present invention to provide a kit for performing a method as provided by the present invention, comprising a solid porous support as provided by the present invention.

### Short Description of the Figures

**Figure 1** illustrates the presence of a polymeric material within a channel of a porous support: wherein:
**Figure 1A** illustrates the partially polymerised material along the inner walls (iw) of the channel prior to removal of the co-solvent; the centre of the channel (c) contains still un-polymerised masking material;
**Figure 1B** illustrates a fully masked channel wherein the polymer material is completely dried or polymerised.

**Table 1**

| **Agent** | **Mask Property provided by said agent** |
|---|---|
| Metal powder (e.g. gold, copper, aluminium) | Electricity conduction |
| Inks, dyes | Coloured grid |
| Magnetic particles | Magnetic field |
| Silane | Changed hydrophobicity |
| Antibiotics, protamine, silver chloride, titanium | Reduced adhesion/absorption of |
| dioxide, polymethacrylate, | micro-organisms |
| Polylysine, collagen, fibronectin, Oleyl-O- | Increased adhesion/adsorption by tissue culture |
| poly(ethylene glycol)-ether | cells |

Hormones, extracts from pathogens, surfactants Repellent to motile organisms

## Claims

1. Method for the manufacture of a masked solid support suitable for array analysis comprising the steps of:
(i) providing a solid porous support suitable for array analysis having first and second surfaces, said solid porous support having channels extending from said first surface to said second surface;
(ii) depositing at a predefined area on said porous solid support a polymeric material to said first surface, said polymeric material comprising a co-solvent so as to temporarily decrease the viscosity and/or rate of polymerisation of the polymeric material during the step of depositing;
(iii) allowing said polymeric material to enter said channels of said solid porous support;
(iv) removing said co-solvent by contacting said first surface with a wash solution and extracting the co-solvent/wash solution through said channels so as to restore the polymerisation rate of the polymer material within said channels,
whereby a mask on said solid support is formed.

2. The method according to claim 1, wherein said co-solvent is chosen from the group comprising glycols and glycol ethers.

3. The method according to claim 1 or 2, wherein said mask forms a grid of polymeric material through said solid porous support.

4. The method according to any of claims 1 to 3, wherein said polymeric material comprises an agent, said agent affecting the mask properties.

5. The method according to claim 4, wherein said mask properties are chosen from the group comprising electricity conduction, colour, magnetical charge, hydrophobicity, adhesion/absorption of microorganisms, adhesion/adsorption by tissue culture cells, and repellent/attracting property.

6. The method according to any of claims 1 to 5, wherein said polymeric material is a latex polymer.

7. The method according to any of claims 1 to 6, wherein said depositing step is by a means chosen from the group comprising a high precision x-y-z pipettor, inkjet printer, and manual handling.

8. The method according to any of claims 1 to 7, wherein said solid porous support is a flow-through support.

9. The method according to any of the claims 1 to 8, wherein said solid porous support is a metal oxide support.

10. The method according to claim 9, wherein said metal oxide is aluminium oxide.

11. A masked solid porous support obtainable by a method according to any of claims 1 to 10 suitable for array analysis comprising first and second surfaces, said solid porous support having channels extending from said first surface to said second surface; wherein at a predefined area on said porous solid support a polymeric material is present, wherein said polymeric material is within the channels and forms a mask on the solid porous support.

12. The solid porous support according to claim 11, wherein said mask forms a grid of polymeric material through said solid porous support.

13. The solid porous support according to claim 11 or 12, wherein said polymeric material comprises an agent, said agent affecting the mask properties.

14. The solid porous support according to any of claims 11 to 13, wherein said polymeric material is a latex polymer.

15. The solid porous support according to any of claims 11 to 14, wherein said solid porous support is a flow-through support.

16. The solid porous support according to any of claims 11 to 15, wherein said solid porous support is a metal oxide support.

17. The solid porous support according to claim 16, wherein said metal oxide is aluminium oxide.

18. Use of a solid porous support according to any of claims 11 to 17 for microarray analysis.

19. Use of a solid porous support according to any of claims 11 to 17 for cell-based assays.

20. Use of a solid porous support according to any of claims 11 to 17 for drug screening assays.

21. A kit for array analysis comprising a solid porous support according to any of the claims 11 to 17.

## Patentansprüche

1. Verfahren zur Fertigung eines maskierten festen Trägers, der sich für die Arrayanalyse eignet, der die Schritte umfasst:
(i) Bereitstellen eines festen porösen Trägers, der sich für die Arrayanalyse eignet, der eine erste und eine zweite Oberfläche aufweist, wobei der feste poröse Träger Kanäle aufweist, die sich von der ersten Oberfläche zur zweiten Oberfläche erstrecken;
(ii) Abscheiden auf einem vorbestimmten Bereich auf dem porösen festen Träger eines polymerischen Materials an der ersten Oberfläche, wobei das polymerische Material ein Co-Lösemittel umfasst, um während des Schritts des Abscheidens vorübergehend die Viskosität und/oder Polymerisationsgeschwindigkeit des polymerischen Materials zu senken;
(iii) Eindringen lassen des polymerischen Materials in die Kanäle des festen porösen Trägers;
(iv) Entfernen des Co-Lösemittels, indem die erste Oberfläche mit einer Waschlösung in Kontakt gebracht wird, und indem das Co-Lösemittel/die Waschlösung so durch die Kanäle extrahiert wird, dass die Polymerisationsgeschwindigkeit des Polymermaterials innerhalb der Kanäle wieder hergestellt wird, wodurch eine Maske auf dem festen Träger gebildet wird.

2. Verfahren nach Anspruch 1, wobei das Co-Lösemittel ausgewählt ist aus der Gruppe umfassend Glycole und Glycolether.

3. Verfahren nach Anspruch 1 oder 2, wobei die Maske ein Gitter aus polymerischem Material durch den festen porösen Träger bildet.

4. Verfahren nach einem der Ansprüche 1 bis 3, wobei das polymerische Material ein Agens umfasst, wobei das Agens die Maskeneigenschaften beeinflusst.

5. Verfahren nach Anspruch 4, wobei die Maskeneigenschaften ausgewählt sind aus der Gruppe umfassend Elektrizitätsleitung, Farbe, magnetische Ladung, Hydrophobie, Adhäsion/Absorption von Mikroorganismen, Adhäsion/Adsorption durch Gewebekulturzellen und abweisende/anziehende Eigenschaft.

6. Verfahren nach einem der Ansprüche 1 bis 5, wobei das polymerische Material ein Latexpolymer ist.

7. Verfahren nach einem der Ansprüche 1 bis 6, wobei der Abscheidungsschritt durch ein Mittel erfolgt, ausgewählt aus der Gruppe umfassend x-y-z-Hochpräzisionspipettor, Tintenstrahldrucker und manuelle Ausführung.

8. Verfahren nach einem der Ansprüche 1 bis 7, wobei der feste poröse Träger ein Durchflussträger ist.

9. Verfahren nach einem der Ansprüche 1 bis 8, wobei der feste poröse Träger ein Metalloxidträger ist.

10. Verfahren nach Anspruch 9, wobei das Metalloxid ein Aluminiumoxid ist.

11. Maskierter fester poröser Träger, der durch ein Verfahren nach einem der Ansprüche 1 bis 10 erhalten werden kann, der für die Arrayanalyse geeignet ist, der eine erste und eine zweite Oberfläche umfasst, wobei der feste poröse Träger Kanäle aufweist, die sich von der ersten Oberfläche zur zweiten Oberfläche erstrecken; wobei in einem vorbestimmter Bereich auf dem porösen festen Träger ein polymerisches Material vorhanden ist, wobei sich das polymerische Material innerhalb der Kanäle befindet und eine Maske auf dem festen porösen Trägers bildet.

12. Fester poröser Träger nach Anspruch 11, wobei die Maske ein Gitter aus polymerischem Material durch den festen porösen Träger bildet.

13. Fester poröser Träger nach Anspruch 11 oder 12, wobei das polymerische Material ein Agens umfasst, wobei das Agens die Maskeneigenschaften beeinflusst.

14. Fester poröser Träger nach einem der Ansprüche 11 bis 13, wobei das polymerische Material ein Latexpolymer ist.

15. Fester poröser Träger nach einem der Ansprüche 11 bis 14, wobei der feste poröse Träger ein Durchflussträger ist.

16. Fester poröser Träger nach einem der Ansprüche 11 bis 15, wobei der feste poröse Träger ein Metalloxidträger ist.

17. Fester poröser Träger nach Anspruch 16, wobei das Metalloxid ein Aluminiumoxid ist.

18. Verwendung eines festen porösen Trägers nach einem der Ansprüche 11 bis 17 zur Mikroarrayanalyse.

19. Verwendung eines festen porösen Trägers nach einem der Ansprüche 11 bis 17 für zellbasierte Assays.

20. Verwendung eines festen porösen Trägers nach einem der Ansprüche 11 bis 17 für Arzneimittelscreening-Assays.

21. Kit zur Arrayanalyse, das einen festen porösen Träger nach einem der Ansprüche 11 bis 17 umfasst.

## Revendications

1. Procédé de fabrication d'un support solide masqué approprié à l'analyse de réseaux comprenant les étapes consistant à :
(i) fournir un support poreux solide approprié à l'analyse de réseaux ayant des première et deuxième surfaces, ledit support poreux solide ayant des canaux s'étendant depuis ladite première surface jusqu'à ladite deuxième surface ;
(ii) déposer au niveau d'une zone prédéfinie sur ledit support solide poreux d'un matériau polymère sur ladite première surface, ledit matériau polymère comprenant un cosolvant de façon à réduire temporairement la viscosité et/ou le taux de polymérisation du matériau polymère pendant l'étape de dépôt ;
(iii) laisser ledit matériau polymère entrer dans lesdits canaux dudit support poreux solide ;
(iv) éliminer ledit cosolvant en mettant en contact ladite première surface avec une solution de lavage et extraire ledit cosolvant/ladite solution de lavage à travers lesdits canaux de façon à restaurer le taux de polymérisation du matériau polymère dans lesdits canaux,
moyennant quoi un masque sur ledit support solide est formé.

2. Procédé selon la revendication 1, dans lequel ledit cosolvant est choisi dans le groupe constitué par les glycols et les éthers de glycol.

3. Procédé selon la revendication 1 ou 2, dans lequel ledit masque forme une grille de matériau polymère à travers ledit support poreux.

4. Procédé selon l'une quelconque des revendications 1 à 3, dans lequel ledit matériau polymère comprend un agent, ledit agent affectant les propriétés du masque.

5. Procédé selon la revendication 4, dans lequel lesdites propriétés du masque sont choisies dans le groupe comprenant la conduction électrique, la couleur, la charge magnétique, l'hydrophobie, l'adhésion/ absorption des microorganismes, l'adhésion/adsorption par les cellules de culture des tissus et la propriété répulsive/attractive.

6. Procédé selon l'une quelconque des revendications 1 à 5, dans lequel ledit matériau polymère est un polymère de latex.

7. Procédé selon l'une quelconque des revendications 1 à 6, dans lequel ladite étape de dépôt est effectuée par un moyen choisi dans le groupe comprenant un pipetteur x-y-z haute précision, une imprimante à jet d'encre et une manipulation manuelle.

8. Procédé selon l'une quelconque des revendications 1 à 7, dans lequel ledit support poreux solide est un support à écoulement.

9. Procédé selon l'une quelconque des revendications 1 à 8, dans lequel ledit support poreux solide est un support à base d'oxyde métallique.

10. Procédé selon la revendication 9, dans lequel ledit oxyde métallique est l'oxyde d'aluminium.

11. Support poreux solide masqué pouvant être obtenu par un procédé selon l'une quelconque des revendications 1 à 10 approprié pour l'analyse de réseaux comprenant lesdites première et deuxième surfaces, ledit support poreux solide ayant des canaux s'étendant depuis ladite première surface vers ladite deuxième surface ; dans lequel au niveau d'une zone prédéfinie sur ledit support poreux solide, un matériau polymère est présent, dans lequel ledit matériau polymère est dans les canaux et forme un masque sur le support poreux solide.

12. Support poreux solide selon la revendication 11, dans lequel ledit masque forme une grille de matériau polymère à travers ledit support poreux solide.

13. Support poreux solide selon la revendication 11 ou 12, dans lequel ledit matériau polymère comprend un agent, ledit agent affectant les propriétés du masque.

14. Support poreux solide selon l'une quelconque des revendications 11 à 13, dans lequel ledit matériau polymère est un polymère de latex.

15. Support poreux solide selon l'une quelconque des revendications 11 à 14, dans lequel ledit support poreux solide est un support à écoulement.

16. Support poreux solide selon l'une quelconque des revendications 11 à 15, dans lequel ledit support poreux solide est un support à base d'oxyde métallique.

17. Support poreux solide selon la revendication 16 dans lequel ledit oxyde métallique est l'oxyde d'aluminium.

18. Utilisation d'un support poreux solide selon l'une quelconque des revendications 11 à 17 pour l'analyse de microréseaux.

19. Utilisation d'un support poreux solide selon l'une quelconque des revendications 11 à 17 pour les essais à base de cellules.

20. Utilisation d'un support poreux solide selon l'une quelconque des revendications 11 à 17 pour les essais de dépistage de médicaments.

21. Kit d'analyse de réseaux comprenant un support poreux solide selon l'une quelconque des revendications 11 à 17.
